(19) Europäisches Patentamt / European Patent Office / Office européen des brevets

(11) **EP 2 708 449 B1**

(12) **EUROPEAN PATENT SPECIFICATION**

(45) Date of publication and mention
of the grant of the patent:
**10.08.2016 Bulletin 2016/32**

(51) Int Cl.:
**B62D 25/20** (2006.01)    **B62D 25/04** (2006.01)

(21) Application number: **11864976.3**

(86) International application number:
**PCT/JP2011/060989**

(22) Date of filing: **12.05.2011**

(87) International publication number:
**WO 2012/153425 (15.11.2012 Gazette 2012/46)**

(54) **VEHICLE STRUCTURE**

FAHRZEUGSTRUKTUR

STRUCTURE DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.03.2014 Bulletin 2014/12**

(73) Proprietor: **TOYOTA JIDOSHA KABUSHIKI
KAISHA**
**Toyota-shi, Aichi-ken 471-8571 (JP)**

(72) Inventor: **SHINOHARA, Keiji**
**Toyota-shi**
**Aichi 471-8571 (JP)**

(74) Representative: **TBK**
**Bavariaring 4-6**
**80336 München (DE)**

(56) References cited:
**EP-A2- 1 081 025        JP-A- 11 342 869
JP-A- H11 342 869        JP-A- 2000 255 451
JP-A- 2010 083 255        JP-A- 2011 057 146
JP-U- 62 102 770**

## Description

Field

The present invention relates to a vehicle structure. Background

As a conventional vehicle structure, for example, JP H11 342 869 A discloses a lower vehicle body structure of a vehicle including rockers extending from opposite sides of a lower portion of a vehicle body in the backward-forward direction and front pillars standing on upper surfaces of front ends of the rockers. The lower vehicle body structure of the vehicle includes a reinforcement member disposed at a connection part of the front pillar and the rocker, and a rear end of a rocker joint surface of the reinforcement member jointed to an upper surface of the rocker is inclined from a front side of an interior of the vehicle to a rear side of an outside of the vehicle in the width direction of the vehicle. Accordingly, the lower vehicle body structure of the vehicle is configured such that a buckling force applied to the rocker is dispersed in the backward-forward direction of the rocker.

Furthermore, a vehicle structure according to the preamble of claim 1 is disclosed in EP 1 081 025 A.

Summary

Technical Problem

Incidentally, the lower vehicle body structure of the vehicle disclosed in JP H11 342 869 A needs to be improved in an aspect of strength.

The present invention has been made in an effort to solve the above-mentioned problems, and it is an object of the present invention to provide a vehicle structure which can enhance strength.

Solution to Problem

According to the present invention, the above object is solved with a vehicle structure having the features of claim 1. Further embodiments are laid down in the dependent claims. Advantageous Effects of Invention

The vehicle structure according to the present invention has an effect that the strength can be enhanced.

Brief Description of Drawings

FIG. 1 is a partial perspective view illustrating a side portion of a vehicle body of a vehicle to which a vehicle structure according to an embodiment of the present invention is applied, the side portion of the vehicle body being viewed from a vehicle exterior side.

FIG. 2 is a partial front view illustrating the vehicle structure which is viewed from the vehicle exterior side.

FIG. 3 is a partial front view illustrating the vehicle structure which is viewed from the vehicle exterior side.

FIG. 4 is a diagram explaining an example of an operation of the vehicle structure in the case of a front collision to the vehicle.

FIG. 5 is a partial front view illustrating a vehicle structure according to another embodiment of the present invention, the vehicle structure being viewed from the vehicle exterior side.

FIG. 6 is a diagram explaining an example of an operation of the vehicle structure in the case of a side collision to the vehicle.

Description of Embodiments

Hereinafter, exemplary embodiments of the present invention will be described with reference to the accompanying drawings. Further, the present invention is not limited by the embodiments of the present invention. Constituent elements of the following embodiments of the present invention include elements which can be replaced or are easily replaced by those skilled in the art, or are the substantially same elements.

[Embodiments]

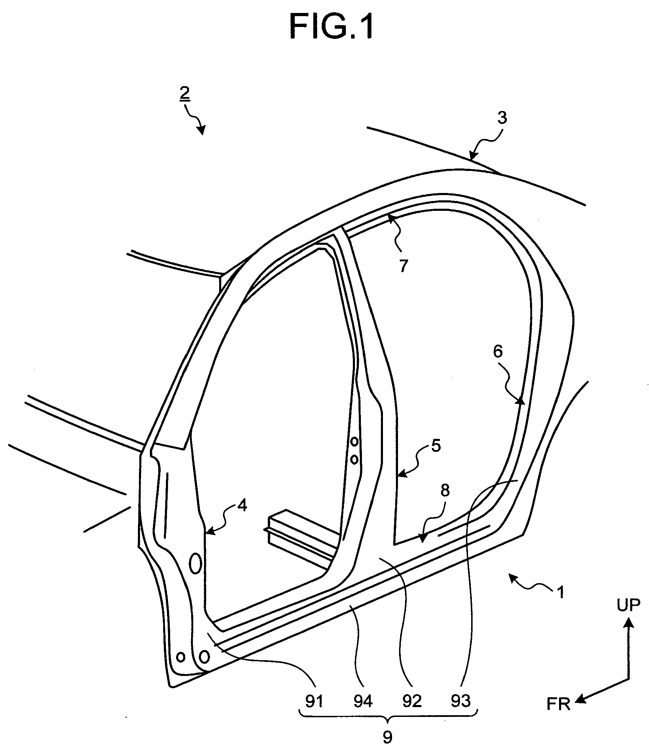

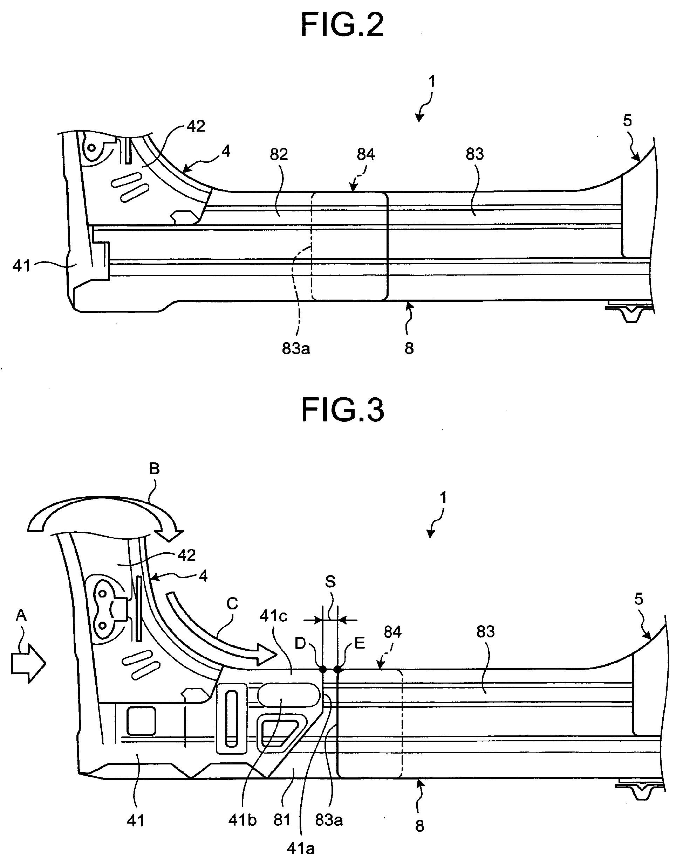

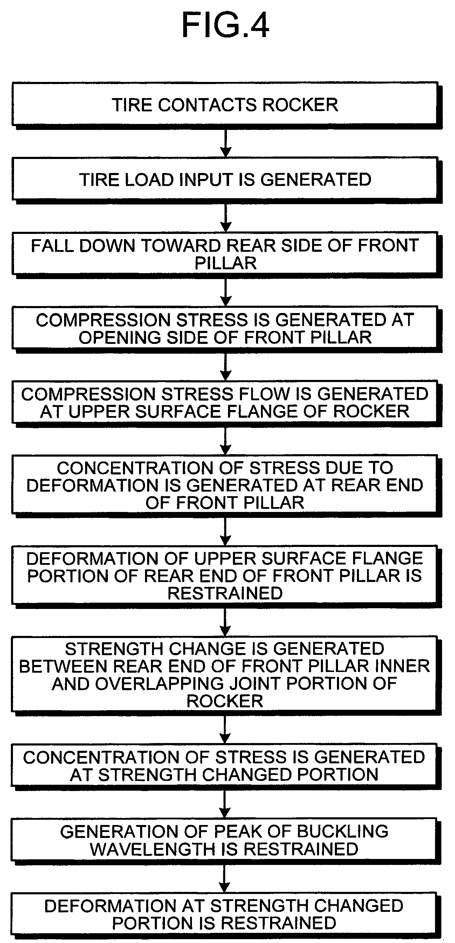

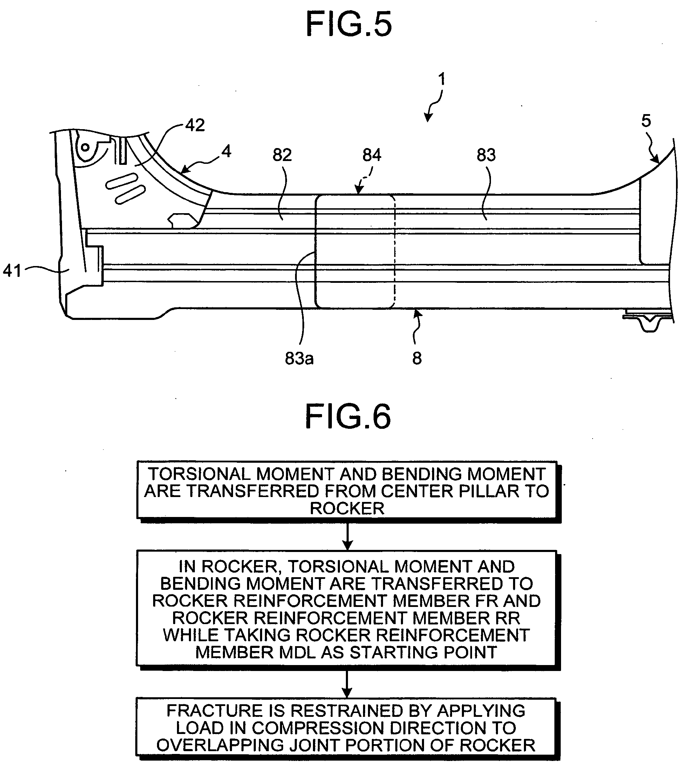

FIG. 1 is a partial perspective view illustrating a side portion of a vehicle body of a vehicle to which a vehicle structure according to an embodiment of the present invention is applied, the side portion of the vehicle body being viewed from the vehicle exterior side. FIGS. 2 and 3 are partial front views illustrating the vehicle structure which is viewed from the vehicle exterior side. FIG. 4 is a diagram explaining an example of an operation of the vehicle structure in the case of a front collision to the vehicle. FIG. 5 is a partial front view illustrating a vehicle structure according to another embodiment of the present invention, the vehicle structure being viewed from the vehicle exterior side. FIG. 6 is a diagram explaining an example of an operation of the vehicle structure in the case of a side collision to the vehicle.

FIGS. 2 and 5 illustrates a state in which a side member outer panel 9 (see FIG. 1) is separated, and FIG. 3 illustrates a state in which the side member outer panel 9 and a rocker outer reinforcement front 82 (see FIG. 2) are separated. Unless particularly mentioned in the following description of the present invention, a direction along a travel direction of a vehicle 2 is referred to as a backward-forward direction of the vehicle body, a heightwise direction of the vehicle 2 is referred to as a upward-downward direction of the vehicle body, and a direction perpendicular to the backward-forward direction of the vehicle body and the vertical direction of the vehicle body is referred to as a width direction of the vehicle body. Typically, when the wheels of the vehicle 2 are disposed on a flat road surface, the upward-downward direction of the vehicle body is a direction along the vertical direction, and the backward-forward direction and the width direction of the vehicle body are directions along the horizontal direction. An interior space of the vehicle 2 in which the passenger cabins of the vehicle 2 are divided is referred to as a vehicle interior side, and an exterior air space of the outside of the vehicle 2 is referred to as a vehicle exterior side. An arrow FR illustrated in FIG. 1 indicates a forward direction of the backward-forward direction of the vehicle body, and an arrow UP indicates an upward direction of the upward-downward direction of the vehicle body.

As illustrated in FIG. 1, a vehicle structure 1 according to the embodiment of the present invention is applied to a vehicle body 3 of the vehicle 2. The vehicle 2 includes the vehicle structure 1 as a frame component of the vehicle body of a high strength and a high rigidity, which forms a frame of the vehicle body 3. The vehicle structure 1 includes a front pillar (A pillar) 4, a center pillar (B pillar) 5, a rear pillar (C pillar) 6, a roof side rail 7, a rocker (side sill) 8, and the like. The front pillar 4, the center pillar 5, the rear pillar 6, the roof side rail 7, and the rocker 8 are provided at both sides of the width direction of the vehicle body, respectively, but only one side of the width direction will be described and the other side thereof will not described in the following unless particularly mentioned.

The front pillar 4, the center pillar 5, and the rear pillar 6 are column-shaped members, and extend from a side portion of the vehicle body of the vehicle 2 along the upward-downward direction of the vehicle body, that is, the vertical direction. The front pillar 4 is an end pillar disposed at a front end of the side portion of the vehicle body in the backward-forward direction of the vehicle body, the center pillar 5 is a middle pillar disposed at a middle portion of the side portion of the vehicle body in the backward-forward direction of the vehicle body, and the rear pillar 6 is an end pillar disposed at a rear portion of the side portion of the vehicle body in the backward-forward direction of the vehicle body. The roof side rail 7 and the rocker 8 are beam-shaped members, and extend from the side portion of the vehicle body along the backward-forward direction of the vehicle body, that is, the horizontal direction. The roof side rail 7 is disposed at an upper portion of the side portion of the vehicle body in the upward-downward direction of the vehicle body, and the rocker 8 is disposed at a lower portion of the side portion of the vehicle body in the upward-downward direction of the vehicle body.

In the vehicle structure 1, the front pillar 4, the center pillar 5, the rear pillar 6, the roof side rail 7, and the rocker 8 are connected to each other to form the frame of the vehicle body 3. That is, an upper end of the front pillar 4 is joined to an end of the roof side rail 7 in the backward-forward direction of the vehicle body, that is, a front end of the roof side rail 7, and a lower end of the front pillar 4 is joined to a front end of the rocker 8 in the backward-forward direction of the vehicle body. An upper end of the center pillar 5 is joined to a middle portion of the roof side rail 7 in the backward-forward direction of the vehicle body, and a lower end of the center pillar 5 is joined to a middle portion of the rocker 8 in the backward-forward direction of the vehicle body. An upper end of the rear pillar 6 is joined to an opposite end of the roof side rail 7 in the backward-forward direction of the vehicle body, that is, a rear end of the roof side rail 7, and a lower end of the rear pillar 6 is joined to a rear end of the rocker 8 in the backward-forward direction of the vehicle body.

As illustrated in FIGS. 2 and 3, typically in the vehicle structure 1 according to the embodiment of the present invention, the rocker 8 as a side sill for generating an important drag in the case of a front collision or a side collision to the vehicle body 3 includes a plurality of rocker reinforcement members separately formed and the adjacent rocker reinforcement members are joined to each other in a predetermined form to increase strength. In the vehicle structure 1, the adjacent rocker reinforcement members are joined to each other in an overlapping manner, and a so called buckling wavelength is considered.

Here, the front pillar 4, the center pillar 5, the rear pillar 6, the roof side rail 7, and the rocker 8 are configured to include an outer member, an inner member, various reinforcement members, and the like as structural members, respectively.

For example, the front pillar 4 is configured to include a front pillar inner panel (hereinafter, may be briefly referred to as a "pillar inner" unless particularly mentioned) 41 as a pillar inner member, a front pillar outer panel (hereinafter, may be briefly referred to as a "pillar outer") 91 (see FIG. 1) as a pillar outer member, and a front pillar outer reinforcement (hereinafter, may be briefly referred to as a "pillar reinforcement" unless particularly mentioned) 42 as a pillar reinforcement member.

The front pillar 4 has a substantially U-shaped cross-section, and the pillar inner 41 and the pillar outer 91 facing each other in the width direction of the vehicle body are joined to each other to form a main structure member. The pillar inner 41 is disposed to face the vehicle interior side so as to form an inner part of the front pillar 4 in the width direction of the vehicle body. The pillar outer 91 is disposed to face the vehicle exterior side so as to form an outer part of the front pillar 4 in the width direction of the vehicle body. The pillar reinforcement 42 is disposed between the pillar inner 41 and the pillar outer 91 with respect to the width direction of the vehicle body, and reinforces a strength and a hardness of the front pillar 4 as a reinforcement member.

The rocker 8 is configured to include a rocker inner panel (hereinafter, may be briefly referred to as a "rocker inner" unless particularly mentioned) 81 as a rocker inner member, a rocker outer panel (hereinafter, may be briefly referred to as a "rocker outer") 94 as a rocker outer member, a rocker outer reinforcement front member (hereinafter, may be briefly referred to as a "rocker reinforcement FR") 82 as a rocker reinforcement member, a rocker outer reinforcement middle member (hereinafter, may be briefly referred to as a "rocker reinforcement MDL") 83, and an outer reinforcement rear member (not illustrated, and hereinafter, may be briefly referred to as a "rocker reinforcement RR").

The rocker 8 has a substantially U-shaped cross-section, and the rocker inner 81 and the rocker outer 94 facing each other in the width direction of the vehicle body are joined to each other to form a main structure member. The rocker inner 81 is disposed to face the vehicle interior side so as to form an inner part of the rocker 8 in the width direction of the vehicle body. The rocker outer 94 is disposed to face the vehicle exterior side so as to form an outer part of the rocker 8 in the width direction of the vehicle body. The rocker reinforcement FR 82, the rocker reinforcement MDL 83, and the rocker reinforcement RR (not illustrated) are disposed between the rocker inner 81 and the rocker outer 94 with respect to the width direction of the vehicle body to reinforce a strength and a hardness of the rocker 8 as reinforcement members.

In addition, since the center pillar 5 and the rear pillar 6 have substantially the same configuration as that of the front pillar 4, a detailed description thereof will not be provided. Further, although the roof side rail 7 also includes an inner member, an outer member, a reinforcement member, and the like, a detailed description thereof will not be provided here. Here, as illustrated in FIG. 1, the vehicle structure 1 includes the side member outer panel 9. The side member outer panel 9 forms a side surface of the vehicle body. The side member outer panel 9 is configured such that the front pillar outer panel 91 of the front pillar 4 extending in the upward-downward direction of the vehicle at a front part of a side surface of the vehicle, a center outer panel 92 of the center pillar 5 extending in the upward-downward direction of the vehicle at a middle part of the side surface of the vehicle in the backward-forward direction of the vehicle body, a rear pillar outer panel 93 of the rear pillar 6 extending in the upward-downward direction of the vehicle at a rear part of the side surface of the vehicle, and the rocker outer panel 94 of the rocker 8 extending in the backward-forward direction of the vehicle at a lower part of the side surface of the vehicle body are integrally formed. Consequently, the side member outer panel 9 is disposed on the vehicle exterior side, that is, an outer side of the pillar reinforcement 42, the rocker reinforcement FR 82, the rocker reinforcement MDL 83, the rocker reinforcement RR, and the like.

Referring back to FIGS. 2 and 3, the rocker reinforcement FR 82, the rocker reinforcement MDL 83, and the rocker reinforcement RR (not illustrated) which are rocker reinforcement members of the rocker 8 according to the embodiment of the present invention are separate rod-shaped members, that is, are divided into a plurality of members with respect to the backward-forward direction of the vehicle body. The rocker reinforcement FR 82, the rocker reinforcement MDL 83, and the rocker reinforcement RR are disposed to be adjacent to each other in the backward-forward direction of the vehicle body. The rocker reinforcement FR 82 is disposed at the front end of the rocker 8 in the backward-forward direction of the vehicle body, and is located aside a lower end of the front pillar 4. The rocker reinforcement MDL 83 is disposed at a middle part of the rocker 8 in the backward-forward direction of the vehicle body, and is located at a lower side of the center pillar 5. The rocker reinforcement RR (not illustrated) is disposed at the front end of the rocker 8 in the backward-forward direction of the vehicle body, and is located aside a lower end of the rear pillar 6. Consequently, the rocker 8 includes the rocker reinforcement FR 82 and the rocker reinforcement RR as side reinforcement members provided at ends of the rocker 8, and the rocker reinforcement MDL 83 as a center reinforcement member provided at a middle part of the rocker 8, as rocker reinforcement members.

The rocker 8 is configured to include an overlapping joint portion 84 where the rocker reinforcement FR 82 and the rocker reinforcement MDL 83, which are adjacent to each other, are joined to overlap each other in the width direction of the vehicle body of the vehicle 2. The overlapping joint portion 84 is located between the front pillar 4 and the center pillar 5 with respect to the backward-forward direction of the vehicle body in the rocker 8.

Further, the rocker 8 includes an overlapping joint portion (not illustrated) where the rocker reinforcement MDL 83 and the rocker reinforcement RR, which are adjacent to each other, are joined to overlap each other in the width direction of the vehicle body of the vehicle 2. The overlapping joint portion of the rocker reinforcement MDL 83 and the rocker reinforcement RR is located between the center pillar 5 and the rear pillar 6 with respect to the backward-forward direction of the vehicle body in the rocker 8. Since the overlapping joint portion has substantially the same configuration as the overlapping joint portion 84, an illustration and a description thereof will not be provided here.

The overlapping joint portion 84 is configured such that an end of the rocker reinforcement FR 82 facing the center pillar 5 and an end of the rocker reinforcement MDL 83 facing the front pillar 4 overlap each other in the width direction of the vehicle body and the overlapping portions are joined to each other by various joint methods such as spot welding. The rocker 8 is configured such that, at the overlapping joint portion 84 of the rocker reinforcement FR 82 and the rocker reinforcement MDL 83, the end of the rocker reinforcement FR 82 is located on the vehicle exterior side and the end of the rocker reinforcement MDL 83 is located on the vehicle interior side. In more detail, in the rocker 8, the rocker reinforcement FR 82 and the rocker reinforcement RR are disposed on the vehicle exterior side, whereas the rocker reinforcement MDL 83 is disposed on the vehicle interior side.

The rocker 8 is configured such that a gap S between an end 83a of the overlapping joint portion 84 facing the front pillar 4 and an end of the front pillar 4, that is, an end 41a of the pillar inner 41 facing the overlapping joint portion 84 is set to be a predetermined dimension. The end 83a of the overlapping joint portion 84 facing the front pillar 4 corresponds to the end of the rocker reinforcement MDL 83 facing the front pillar 4, in more detail, facing the overlapping joint portion 84. The end 41a of the pillar inner 41 facing the overlapping joint portion 84 corresponds to the rear end of the pillar inner 41. Typically, the gap S is set to be a predetermined dimension such that generation of a peak of a buckling wavelength of the rocker 8 is restrained when a load is applied to the rocker 8 from the backward-forward direction of the vehicle body.

Here, the buckling wavelength of the rocker 8 refers to a bucking wavelength of the rocker 8 generated when a high load is applied to the rocker 8 from the backward-forward direction of the vehicle body so that the rocker 8 is buckled. In more detail, the buckling wavelength of the rocker 8 corresponds to a length corresponding to a gap between an n-th buckling generation point and an (n+1)-th buckling generation point which are generated at a gap in the lengthwise direction when a load is applied to the rocker 8 from the backward-forward direction of the vehicle body and the rocker 8 is buckled. Typically, the buckling wavelength of the rocker 8 is determined in response to a sectional shape of a section (a section along the width direction of the vehicle body) crossing the lengthwise direction of the rocker 8, and for example, can be illustrated in Equation (1). In Equation (1), "λ" denotes a buckling wavelength of the rocker 8, "H" denotes a height of the section crossing the lengthwise direction of the rocker 8, and "W" denotes a width of the section crossing the lengthwise direction of the rocker 8.

$$\lambda = (H + W)/2 \qquad (1)$$

The gap S of the embodiment of the present invention is set to one fourth or less than the buckling wavelength λ of the rocker 8. Accordingly, the gap S of the rocker 8 is set to be a dimension such that generation of a peak of a buckling wavelength of the rocker 8 is restrained.

The pillar inner 41 according to the embodiment of the present invention includes a horizontal bead 41b as a concave reinforcing portion. The pillar inner 41 is configured such that an end (around the end 41a) of the pillar inner 41 facing the overlapping joint portion 84 is located between the rocker inner 81 and the rocker reinforcement FR 82 with respect to the width direction of the vehicle body. The horizontal bead 41b is provided at a lower side of an upper surface flange portion 41c of an end of the pillar inner 41 facing the overlapping joint portion 84. That is, the horizontal bead 41b is provided at a lower side of the upper surface flange portion 41c of a portion located between the rocker inner 81 and the rocker reinforcement FR 82 in the pillar inner 41. The horizontal bead 41b is provided along the backward-forward direction of the vehicle body, that is, a horizontal direction, and is formed as a concave portion recessed toward the vehicle interior side. In the pillar inner 41, as the horizontal bead 41b is provided in the upper surface flange portion 41c, the number of ridgelines (angular portions) along the horizontal direction increases, making it possible to relatively enhance bucking strength for a load in the backward-forward direction of the vehicle body.

In the above-configured vehicle structure 1, since strength is enhanced at the overlapping joint portion 84 between the rocker reinforcement FR 82 and the rocker reinforcement MDL 83, and the overlapping joint portion (not illustrated) between the rocker reinforcement MDL 83 and the rocker reinforcement RR, for example, the strength of the rocker 8 for a side collision against the vehicle body 3 can be enhanced.

For example, as illustrated in the diagram of FIG. 4, in the vehicle structure 1, if a front tire of the vehicle 2 is pressed to contact the rocker 8 in the case of a front collision against the vehicle body 3, a tire load input (an axial force of the tire) along the backward-forward direction of the vehicle body is generated to the rocker 8 as indicted by an arrow A of FIG. 3. Then, in the vehicle structure 1, as indicated by an arrow B of FIG. 3, the front pillar 4 tends to fall down in the backward-forward direction of the vehicle body, and as indicated by an arrow C of FIG. 3, a compression stress is generated at an opening side (here, the rear side of the backward-forward direction of the vehicle body) of the front pillar 4 and a flow of compression stress is generated at the upper surface flange portion of the rocker 8 at the same time.

Accordingly, in the vehicle structure 1, concentration of a compression stress due to deformation is generated at a rear end (around the end 41a) of the front pillar 4. At this time, in the vehicle structure 1, since the horizontal bead 41b is provided in the upper surface flange portion 41c of the pillar inner 41, the number of ridgelines along the horizontal direction in the pillar inner 41 becomes relatively larger so that the yield strength of the ridgelines can be relatively increased by the increased number of ridgelines. As a result, in the vehicle structure 1, since strength of the upper surface flange portion 41c of the rear end of the front pillar 4 at the joint portion of the front pillar 4 and the rocker 8, and strength of the upper surface flange portion side of the rocker 8 can be enhanced, a deformation against a front collision can be restrained and thus, falling down of the front pillar 4 can be restrained.

In addition, in the vehicle structure 1, if a tire load input along the backward-forward direction of the vehicle body is generated to the rocker 8 as described above, a strength change is generated between a rear end (around the end 41a) of the pillar inner 41 of the front pillar 4 and the overlapping joint portion 84 of the rocker 8 and thus, variation of a compression stress is generated at the strength changed part (a part corresponding to the gap S). Then, in the vehicle structure 1, since the gap S between the pillar inner 41 and the overlapping joint portion 84 is set to one fourth or less than the bucking wavelength of the rocker 8, generation of a peak of the bucking wavelength of the rocker 8 is restrained. That is, in the vehicle structure 1, since an upper end (see point D of FIG. 3) of the end 41a of the pillar inner 41 facing the overlapping joint portion 84 and an upper end (see point E of FIG. 3) of the end 83a of the overlapping joint portion 84 facing the front pillar 4 become nodes during deformation, the gap S is set to one fourth or less than the buckling wavelength of the rocker 8 and thus a buckling peak cannot be easily generated. As a result, in the vehicle structure 1, since deformation against a front collision can be restrained by mitigating stress concentration in the strength changed part between the rear end (around the end 41a) of the pillar inner 41 of the front pillar 4 and the overlapping joint portion 84 of the rocker 8, the strength of the rocker 8 and the like can be enhanced.

The vehicle structure 1 according to the embodiment of the present invention includes the rocker 8 including the rocker reinforcement FR 82, the rocker reinforcement MDL 83, and the like as the plurality of rocker reinforcement members extending along the backward-forward direction of the vehicle body at a lower portion of the side portion of the vehicle body 3 of the vehicle 2 and disposed adjacent to each other in the backward-forward direction of the vehicle body, and the rocker 8 includes the overlapping joint portion 84 at which the rocker reinforcement FR 82 and the rocker reinforcement MDL 83 which are adjacent to each other are joined to each other to overlap each other in the width direction of the vehicle body of the vehicle 2. Thus, the vehicle structure 1 can enhance the strength of the rocker 8 against a collision to the vehicle body 3.

In addition, for example, as illustrated in FIG. 5, the above-described rocker 8 may be configured such that the end of the rocker reinforcement MDL 83 is located at the vehicle exterior side at the overlapping joint portion 84 between the rocker reinforcement FR 82 and the rocker reinforcement MDL 83, and the end of the rocker reinforcement FR 82 is located on the vehicle interior side. That is, the rocker 8 may be configured such that the rocker reinforcement FR 82 and the rocker reinforcement RR (not illustrated) are disposed on the vehicle interior side, whereas the rocker reinforcement MDL 83 is disposed on the vehicle exterior side.

In this case, for example, as illustrated in the diagram of FIG. 6, in the vehicle structure 1, a torsional moment and a bending moment are transferred from the center pillar 5 to the rocker 8 during a side collision to the vehicle body 3. Accordingly, in the rocker 8 of the vehicle structure 1, a torsional moment and a bending moment are transferred to the rocker reinforcement FR 82 and the rocker reinforcement RR while taking the rocker reinforcement MDL 83 located at the lower side of the center pillar 5 as a starting point. At this time, in the vehicle structure 1, since the end of the rocker reinforcement MDL 83 located on the vehicle exterior side at the overlapping joint portion 84 is behaved to move toward the vehicle interior side, for example, a load is applied to the spot welding part of the overlapping joint portion 84 in the compression direction. As a result, in the vehicle structure 1, since a fracture of the rocker reinforcement FR 82 and the rocker reinforcement MDL 83 can be restrained at the overlapping joint portion 84, the strength of the rocker 8 can be further enhanced. This is also the same at the overlapping joint portion of the rocker reinforcement MDL 83 and the rocker reinforcement RR.

In addition, the vehicle structure according to the embodiment of the present invention is not limited to the above-described embodiment, and can be variously modified within the scope of the claims.

Reference Signs List

    1 vehicle structure
    2 vehicle
    3 vehicle body
    4 front pillar (end pillar)
    5 center pillar (middle pillar)
    6 rear pillar (end pillar)
    7 roof side rail
    8 rocker
    9 side member outer panel
    41 pillar inner (front pillar panel, pillar inner member)
    41b horizontal bead (reinforcing portion)
    41c upper surface flange portion
    42 pillar reinforcement (front pillar outer reinforcement member)
    81 rocker inner (rocker inner panel)
    82 rocker reinforcement FR (rocker outer reinforcement front, rocker reinforcement member, side reinforcement member)
    83 rocker reinforcement MDL (rocker outer reinforcement middle, rocker reinforcement member, center reinforcement member)
    84 overlapping joint portion
    91 pillar outer (front pillar outer panel, pillar outer member)
    94 rocker outer (rocker outer panel)
    S gap

**Claims**

1.  A vehicle structure (1) comprising:

    a rocker (8) configured to extend along a backward-forward direction of a vehicle body (3) of a vehicle (2) at a lower portion of a side portion of the vehicle body (3), and include a plurality of rocker reinforcement members (82, 83) disposed adjacent to each other in the backward-forward direction of the vehicle body (3); and an end pillar (4, 6) configured to extend along an upward-downward direction of the vehicle body (3) at the side portion of the vehicle body (3) of the vehicle (2) and to be joined to an end of the rocker (8) in the backward-forward direction of the vehicle body (3), and to include a pillar inner member (41) and a pillar outer member (91) facing each other in the width direction of the vehicle body (3), wherein

the rocker (8) is configured to include an overlapping joint portion (84) at which the adjacent rocker reinforcement members (82, 83) are joined to overlap each other in a width direction of the vehicle body (3) of the vehicle (2), **characterized by**

a gap (S) between an end of the overlapping joint portion (84) facing the end pillar (4, 6) side and an end of the pillar inner member (41) facing the overlapping joint portion (84) side along the backward-forward direction of the vehicle body (3) is set to one fourth or less than a buckling wavelength of the rocker (8) at the time a load is applied to the rocker (8) from the backward-fonward direction of the vehicle body (3).

2. The vehicle structure (1) according to claim 1, wherein the gap (S) between the end of the overlapping joint portion (84) facing the end pillar (4, 6) side and the end of the pillar inner member (41) facing the overlapping joint portion (84) side along the backward-forward direction of the vehicle body (3) is set to be a dimension such that generation of a peak of a buckling wavelength of the rocker (8) is restrained at the time a load is applied to the rocker (8) from the backward-forward direction of the vehicle body (3).

3. The vehicle structure (1) according to claim 1, wherein the pillar inner member (41) has a reinforcing portion (41b) having a concave shape along the backward-forward direction of the vehicle body (3) at an upper surface flange portion of an end of the overlapping joint portion (84).

4. The vehicle structure (1) according to claim 1, further comprising:

a middle pillar (5) configured to extend along the upward-downward direction of the vehicle body (3) at the side portion of the vehicle body (3) of the vehicle (2) and to be joined to a middle part of the rocker (8), wherein

the rocker (8) is configured to include a side reinforcement member (82) provided at the end of the rocker (8) and a center reinforcement member (83) provided at the middle part of the rocker (8) as the rocker reinforcement members (82, 83), and the center reinforcement member (83) is located on a vehicle exterior side at the overlapping joint portion (84) of the side reinforcement member (82) and the center reinforcement member (83).

**Patentansprüche**

1. Fahrzeugstruktur (1) mit:

einem Schweller (8), der dazu konfiguriert ist, dass er sich entlang einer Rückwärts-Vorwärts-Richtung eines Fahrzeugkörpers (3) eines Fahrzeugs (2) an einem unteren Abschnitt eines Seitenabschnitts des Fahrzeugkörpers (3) erstreckt, und der eine Mehrzahl von Schwellerverstärkungselementen (82, 83) aufweist, die in der Rückwärts-Vorwärts-Richtung des Fahrzeugkörpers (3) benachbart zueinander angeordnet sind; und einer Endsäule (4, 6), die so konfiguriert ist, dass sie sich entlang einer Aufwärts-Abwärts-Richtung des Fahrzeugkörpers (3) an dem Seitenabschnitt des Fahrzeugkörpers (3) des Fahrzeugs (2) erstreckt, und dass sie an ein Ende des Schwellers (8) in der Rückwärts-Vorwärts-Richtung des Fahrzeugkörpers (3) gefügt ist, und die ein Säuleninnenelement (41) und ein Säulenaußenelement (91) aufweist, die einander in der Breitenrichtung des Fahrzeugkörpers (3) zugewandt sind, wobei

der Schweller (8) so konfiguriert ist, dass er einen überlappenden Fügeabschnitt (84) aufweist, an welchen die benachbarten Schwellerverstärkungselemente (82, 83) so gefügt sind, dass sie einander in einer Breitenrichtung des Fahrzeugkörpers (3) des Fahrzeugs (2) überlappen, **gekennzeichnet durch**

einen Spalt (S) zwischen einem Ende des überlappenden Fügeabschnitts (84), der der Seite der Endsäule (4, 6) zugewandt ist, und einem Ende des Säuleninnenelements (41), das der Seite des überlappenden Fügeabschnitts (84) entlang der Rückwärts-Vorwärts-Richtung des Fahrzeugkörpers (3) zugewandt ist, auf ein Viertel oder weniger als eine Beulwellenlänge des Schwellers (8) zu der Zeit, zu der auf den Schweller (8) von der Rückwärts-Vorwärts-Richtung des Fahrzeugkörpers (3) eine Last aufgebracht wird, festgelegt ist.

2. Fahrzeugstruktur (1) gemäß Anspruch 1, wobei der Spalt (S) zwischen dem Ende des überlappenden Fügeabschnitts (84), der der Seite der Endsäule (4, 6) zugewandt ist, und dem Ende des Säuleninnenelements (41), das der Seite des überlappenden Fügeabschnitts (84) entlang der Rückwärts-Vorwärts-Richtung des Fahrzeugkörpers (3) zugewandt ist, so festgelegt ist, dass er eine solche Abmessung hat, dass das Erzeugen eines Spitzenwerts einer Beulwellenlänge des Schwellers (8) zu dem Zeitpunkt, zu dem eine Last aus der Rückwärts-Vorwärts-Richtung des Fahrzeugkörpers (3) auf den Schweller (8) aufgebracht wird, zurückgehalten wird.

3. Fahrzeugstruktur (1) gemäß Anspruch 1, wobei das Säuleninnenelement (41) einen Verstärkungsabschnitt (41b) hat, der eine konkave Form entlang der Rückwärts-Vorwärts-Richtung des Fahrzeugkörpers (3) an einem oberen Flächenflanschabschnitt eines Endes des überlappenden Fügeabschnitts (84) hat.

4. Fahrzeugstruktur (1) gemäß Anspruch 1, ferner mit:

einer mittleren Säule (5), die dazu konfiguriert ist, dass sie sich entlang der Aufwärts-Abwärts-Richtung des Fahrzeugkörpers (3) an dem Seitenabschnitt des Fahrzeugkörpers (3) des Fahrzeugs (2) erstreckt, und an einen mittleren Teil des Schwellers (8) gefügt ist, wobei

der Schweller (8) so konfiguriert ist, dass er ein an dem Ende des Schwellers (8) vorgesehenes Seitenverstärkungselement (82) und ein an dem mittleren Teil des Schwellers (8) vorgesehenes Zentralverstärkungselement (83) als die Schwellerverstärkungselemente (82, 83) aufweist, und sich das Zentralverstärkungselement (83) an einer Fahrzeugaußenseite an dem überlappenden Fügeabschnitt (84) des Seitenverstärkungselements (82) und des Zentralverstärkungselements (83) befindet.

**Revendications**

1. Structure de véhicule (1) comprenant :

un culbuteur (8) configuré pour s'étendre le long d'une direction arrière-avant d'un corps de véhicule (3) d'un véhicule (2) au niveau d'une partie inférieure d'une partie latérale du corps de véhicule (3) et pour comprendre une pluralité d'éléments de renforcement de culbuteur (82, 83) disposés de manière adjacente les uns aux autres dans la direction arrière-avant du corps de véhicule (3) ; et
un pilier d'extrémité (4, 6) configuré pour s'étendre le long d'une direction ascendante-descendante du corps du véhicule (3) au niveau de la partie latérale du corps de véhicule (3) du véhicule (2) et pour être assemblé à une extrémité du culbuteur (8) dans la direction arrière-avant du corps de véhicule (3) et pour comprendre un élément interne de pilier (41) et un élément externe de pilier (91) se faisant face dans le sens de la largeur du corps de véhicule (3), dans laquelle

le culbuteur (8) est configuré pour comprendre une partie de joint chevauchante (84) au niveau de laquelle les éléments de renforcement de culbuteur (82, 83) adjacents sont assemblés pour se chevaucher dans le sens de la largeur du corps de véhicule (3) du véhicule (2), **caractérisée par**

un espace (S) entre une extrémité de la partie de joint chevauchante (84) orientée du côté du pilier d'extrémité (4, 6) et une extrémité de l'élément interne de pilier (41) orienté vers le côté de la partie de joint chevauchante (84) le long de la direction arrière-avant du corps de véhicule (3) est placé sur un quart ou moins d'une longueur d'onde de déformation du culbuteur (8) au moment où une charge est appliquée sur le culbuteur (8) à partir de la direction arrière-avant du corps de véhicule (3).

2. Structure de véhicule (1) selon la revendication 1, dans laquelle l'espace (S) entre l'extrémité de la partie de joint chevauchante (84) orientée vers le côté du pilier d'extrémité (4, 6) et l'extrémité de l'élément interne de pilier (41) orientée vers le côté de la partie de joint chevauchante (84) le long de la direction arrière-avant du corps de véhicule (3), est déterminé pour être une dimension de sorte que la génération d'un pic d'une longueur d'onde de déformation du culbuteur (8) est limitée au moment où une charge est appliquée sur le culbuteur (8) à partir de la direction arrière-avant du corps de véhicule (3).

3. Structure de véhicule (1) selon la revendication 1, dans laquelle l'élément interne de pilier (41) a une partie de renforcement (41b) ayant une forme concave le long de la direction arrière-avant du corps de véhicule (3) au niveau d'une partie de bride de surface supérieure d'une extrémité de la partie de joint chevauchante (84).

4. Structure de véhicule (1) selon la revendication 1, comprenant en outre :

un pilier central (5) configuré pour s'étendre le long de la direction ascendante-descendante du corps de véhicule (3) au niveau de la partie latérale du corps de véhicule (3) du véhicule (2) et pour être assemblé au niveau d'une partie centrale du culbuteur (8), dans laquelle

le culbuteur (8) est configuré pour comprendre un élément de renforcement latéral (82) prévu à l'extrémité du culbuteur (8) et un élément de renforcement central (83) prévu au niveau de la partie centrale du culbuteur (8) en tant qu'éléments de renforcement de culbuteur (82, 83) et l'élément de renforcement central (83) est positionné sur le côté extérieur du véhicule au niveau de la partie de joint chevauchante (84) de l'élément de renforcement latéral (82) et l'élément de renforcement central (83).

# FIG.1

91  94  92  93

9

UP
FR

# FIG.2

# FIG.3

# FIG.4

TIRE CONTACTS ROCKER

↓

TIRE LOAD INPUT IS GENERATED

↓

FALL DOWN TOWARD REAR SIDE OF FRONT PILLAR

↓

COMPRESSION STRESS IS GENERATED AT OPENING SIDE OF FRONT PILLAR

↓

COMPRESSION STRESS FLOW IS GENERATED AT UPPER SURFACE FLANGE OF ROCKER

↓

CONCENTRATION OF STRESS DUE TO DEFORMATION IS GENERATED AT REAR END OF FRONT PILLAR

↓

DEFORMATION OF UPPER SURFACE FLANGE PORTION OF REAR END OF FRONT PILLAR IS RESTRAINED

↓

STRENGTH CHANGE IS GENERATED BETWEEN REAR END OF FRONT PILLAR INNER AND OVERLAPPING JOINT PORTION OF ROCKER

↓

CONCENTRATION OF STRESS IS GENERATED AT STRENGTH CHANGED PORTION

↓

GENERATION OF PEAK OF BUCKLING WAVELENGTH IS RESTRAINED

↓

DEFORMATION AT STRENGTH CHANGED PORTION IS RESTRAINED

## FIG.5

## FIG.6

| TORSIONAL MOMENT AND BENDING MOMENT ARE TRANSFERRED FROM CENTER PILLAR TO ROCKER |

| IN ROCKER, TORSIONAL MOMENT AND BENDING MOMENT ARE TRANSFERRED TO ROCKER REINFORCEMENT MEMBER FR AND ROCKER REINFORCEMENT MEMBER RR WHILE TAKING ROCKER REINFORCEMENT MEMBER MDL AS STARTING POINT |

| FRACTURE IS RESTRAINED BY APPLYING LOAD IN COMPRESSION DIRECTION TO OVERLAPPING JOINT PORTION OF ROCKER |

**EP 2 708 449 B1**

**Patent documents cited in the description**

- JP H11342869 A
- EP 1081025 A